# EUROPEAN PATENT APPLICATION

(11) **EP 4 804 641 A1**
(43) Date of publication of application: **09.09.2026**
(21) Application number: 24885476.2
(22) Date of filing: 18.10.2024
(51) Int. Cl.: H04W 52/02, H04W 72/0457, H04W 84/12

(54) **COMMUNICATION DEVICE, CONTROL METHOD, AND PROGRAM**

(30) Priority: 30.10.2023 JP 2023185970
(71) Applicant: Canon Kabushiki Kaisha, Tokyo 146-8501 (JP)
(72) Inventor: SOMA Tomoyasu, Tokyo 146-8501 (JP)
(74) Representative: Canon Europe Limited
(86) International application number: PCT/JP2024/037124
(87) International publication number: WO 2025/094702

(57) **Abstract**

A communication device receives a wireless frame including information related to a target wake time (TWT) of a first network constructed by a first communication device different from the communication device. The communication device transmits a predetermined frame including a predetermined element that includes information for identifying the first communication device and the information related to the TWT of the first network.

## Description

### Technical Field

The present invention relates to communication devices that perform wireless communication, control methods for communication devices, and programs.

### Background Art

The IEEE (Institute of Electrical and Electronics Engineers) 802.11 standard series is known as a principal communication standard for WLAN (wireless local area network). The IEEE 802.11 standard series includes standards such as IEEE 802.11a, b, g, n, ac, and ax.

In the IEEE 802.11ax standard described in Patent Literature 1, it is disclosed that wireless communication is executed based on OFDMA (orthogonal frequency-division multiple access). In the IEEE 802.11ax standard, OFDMA-based wireless communication is executed so that high peak throughput is achieved. Furthermore, a power-saving technology called TWT (Target Wake Time) is introduced in the IEEE 802.11ax standard. In the IEEE 802.11ax standard, an interval between a doze state in which frame exchange is not performed between an AP (access point) and an STA (station) and an awake state in which the frame exchange is performed is negotiated in accordance with the TWT, so that the AP can control the timing for performing communication with each STA. Accordingly, the duration of the awake state in a time during which communication is not performed is reduced, so that the STA can reduce power consumption.

Furthermore, the IEEE 802.11be standard, which is a successor to the IEEE 802.11ax standard, is under standardization. As a new feature of the IEEE 802.11be standard, a function called multi-link communication is being considered, which involves an AP and an STA performing communication by establishing multiple parallel links via multiple different frequency channels. For example, Patent Literature 2 describes a mechanism for establishing multiple links for multi-link communication. Furthermore, in the IEEE 802.11be standard, low-latency communication using the aforementioned TWT is being considered.

### Citation List

### Patent Literature

PTL 1: Japanese Patent Laid-Open No. 2018-50133
PTL 2: Japanese Patent Laid-Open No. 2021-103805

### Summary of Invention

### Technical Problem

In the IEEE 802.11be standard, R-TWT (Restricted TWT) is being considered.

R-TWT involves setting, within a network (BSS) called SP (Service Period), a period in which only predetermined terminals can perform communication within the network, so that only a predetermined terminal that has been designated transitions to the awake state (communicable state) and can perform communication in the period. By providing the SP in this manner, a terminal permitted to perform communication in the SP can have exclusive access rights to a communication channel. In contrast, a terminal not permitted to perform communication in the SP transitions to, for example, the doze state (non-communicable state) in the period, thereby saving energy.

However, the schedule of the SP is set for each network, and the SP schedule is not shared with a different network (OBSS). Therefore, a terminal that is not aware of the SP schedule of the different network may conceivably execute communication during the SP in the different network. Thus, communication of a terminal permitted to perform communication during the SP may possibly be hindered by communication of a terminal not aware of the SP. This may hinder the realization of low-latency communication using the SP.

### Solution to Problem

An object of the present invention is to provide a specific mechanism for sharing TWT-related information across different networks.

In order to achieve the aforementioned object, a communication device according to an aspect of the present invention is a communication device including: receiving means for receiving a wireless frame including information related to a target wake time of a first network constructed by a first communication device different from the communication device; and transmitting means for transmitting a predetermined frame including a predetermined element, the predetermined element including information for identifying the first communication device and the information related to the target wake time of the first network.

### Advantageous Effects of Invention

According to an aspect of the present invention, TWT-related information can be shared across different networks.

### Brief Description of Drawings

[Fig. 1] Fig. 1 is a diagram illustrating an example of a network configuration.
[Fig. 2] Fig. 2 is a diagram illustrating an example of a hardware configuration of a communication device.
[Fig. 3] Fig. 3 is a diagram illustrating an example of a functional configuration of the communication device.
[Fig. 4] Fig. 4 is a diagram illustrating an example of a flowchart for setting TWT information.
[Fig. 5] Fig. 5 is a diagram illustrating an example of a frame configuration of a reduced neighbor report element.
[Fig. 6] Fig. 6 is a diagram illustrating an example of a restricted TWT schedule info subfield value.
[Fig. 7] Fig. 7 is a diagram illustrating an example of a flowchart of a process for sharing the TWT information.
[Fig. 8] Fig. 8 is a diagram illustrating an example of a frame configuration of a neighbor report element.
[Fig. 9] Fig. 9 is a diagram illustrating an example of a frame configuration of a TWT element.

### Description of Embodiments

Embodiments will now be described in detail below with reference to the appended drawings. The following embodiments are not intended to limit the invention according to the claims. Although the embodiments indicate multiple features, not all of these multiple features are necessarily essential for the invention, and the multiple features may be arbitrarily combined. Moreover, in the appended drawings, identical or similar components are given the same reference signs, and redundant descriptions thereof are omitted.

### <First Embodiment>

### (Network Configuration)

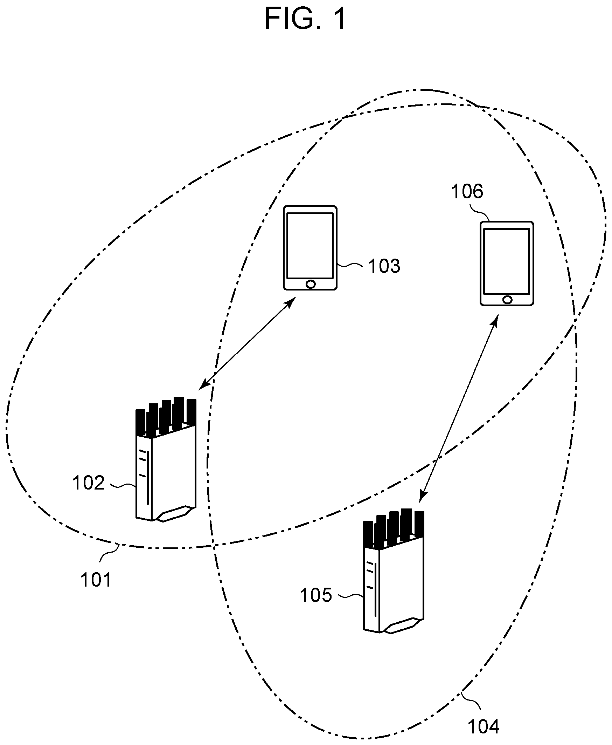

Fig. 1 illustrates an example of a network configuration according to this embodiment. This embodiment is constituted of a network 101 as a first network and a network 104 as a second network different from the first network. In this embodiment, an STA MLD 103 operating as a terminal participates in the network 101 constructed by an AP MLD 102 operating as a base station. An STA MLD 106 operating as a terminal station participates in the network 104 constructed by an AP MLD 105 operating as a base station. AP MLD is an abbreviation for Access Point Multi-Link Device, and STA MLD is an abbreviation for Station Multi-Link Device. An STA MLD is also called a non-AP MLD. An MLD is a communication device including multiple STAs (or APs). By including multiple STAs, an MLD can simultaneously establish multiple links with a counterpart MLD via different frequency channels. Moreover, multi-link communication can be performed via the multiple established links. The network 101 is a network identified based on a first BSS (Basic Service Set), and the network 104 is a network identified based on a second BSS (Basic Service Set). When viewed from a terminal, such as the AP MLD 102 or the STA MLD 103, belonging to a certain network, another network different from the network to which the terminal belongs may also be referred to as an OBSS (Overlapping Basic Service Set).

Although the AP MLD 102, the STA MLD 103, the AP MLD 105, and the STA MLD 106 are described as MLDs as an example in this embodiment, these communication devices do not have to be MLDs and may respectively be an AP 102, an STA 103, an AP 105, and an STA 106.

Each communication device (AP MLD 102, STA MLD 103, AP MLD 105, STA MLD 106) is configured to be capable of executing wireless frame communication compliant with the IEEE 802.11bn standard, which is a successor to the IEEE 802.11be standard that targets a maximum transmission rate of 46.08 Gbps. IEEE is an abbreviation for Institute of Electrical and Electronics Engineers. The principal features of the IEEE 802.11bn standard, which is a successor to the IEEE 802.11be standard, are to achieve high-reliability communication, low-latency communication, and improved throughput under congested conditions. Another objective of 802.11bn is to reduce power consumption at an AP. A wireless frame communicating in accordance with the successor standard is also referred to as a UHR (Ultra High Reliability) PPDU. PPDU is an abbreviation for PLCP Protocol Data Unit, and PLCP is an abbreviation for Physical Layer Convergence Protocol.

The name "UHR" is provided for the sake of convenience in view of the objectives to be achieved in the successor standard and the highlight features of the relevant standard, and may be changed to another name once the standardization is completed. With regard to the name IEEE 802.11bn, another name may be similarly given once the standardization is completed. On the other hand, it should be noted that this description and the appended claims are substantially applicable to all successor standards that are successors to the 802.11be standard. Each communication device can communicate in the 2.4 GHz band, the 3.6 GHz band, the 5 GHz band, and the 6 GHz band, as well as millimeter-wave frequency bands including the 45 GHz band and the 60 GHz band. The frequency bands used by each communication device are not limited to the above, and may include a different frequency band, such as a sub-1 GHz band. Moreover, each communication device can communicate by using bandwidths of 20 MHz, 40 MHz, 80 MHz, 160 MHz, 320 MHz, 540 MHz, and 640 MHz. The bandwidths used by each communication device are not limited to the above, and may include a different bandwidth, such as 240 MHz or 4 MHz.

Each communication device can realize multiuser (MU, multi-user) communication in which signals of multiple users are multiplexed by executing OFDMA communication compliant with the IEEE 802.11ax/be/bn standards. OFDMA is an abbreviation for Orthogonal Frequency Division Multiple Access. In OFDMA communication, resource units as portions of a divided frequency band are allocated to respective STAs so as not to overlap each other, and carrier waves of the respective STAs are orthogonal to each other. Therefore, an AP can simultaneously communicate with multiple STAs within a prescribed bandwidth. In addition to the IEEE 802.11 series, each communication device may be compliant with other communication standards, such as Bluetooth (registered trademark), NFC, UWB, ZigBee, and MBOA. UWB is an abbreviation for Ultra Wide Band, and MBOA is an abbreviation for Multi Band OFDM Alliance. NFC is an abbreviation for Near Field Communication. UWB includes wireless USB, wireless 1394, and WiNET. Furthermore, each communication device may also be compliant with a wired communication standard, such as a wired LAN.

Specific examples of the AP MLD 102 and the AP MLD 105 include a wireless LAN router and a personal computer (PC) but are not limited thereto so long as they are communication devices operable as access points (APs). Each AP MLD may be an information processing device, such as a wireless chip, capable of executing wireless communication compliant with the IEEE802.11bn standard. Specific examples of the STA MLD 103 and the STA MLD 106 include a camera, a tablet, a smartphone, a PC, a mobile phone, a video camera, a headset, a network camera, a printer, a projector, and smartglasses, but are not limited thereto. Each STA MLD may be an information processing device, such as a wireless chip, capable of executing wireless communication compliant with the IEEE802.11bn standard.

Although the network 101 and the network 104, each constituted of a single AP MLD and a single STA MLD, are configured adjacent to each other as an example of a network configuration according to this embodiment, the number of networks, the number of APs, and the number of STAs are not limited to the above. There may be included multiple networks, multiple APs, and multiple STAs.

### (Hardware Configuration of Each Communication Device)

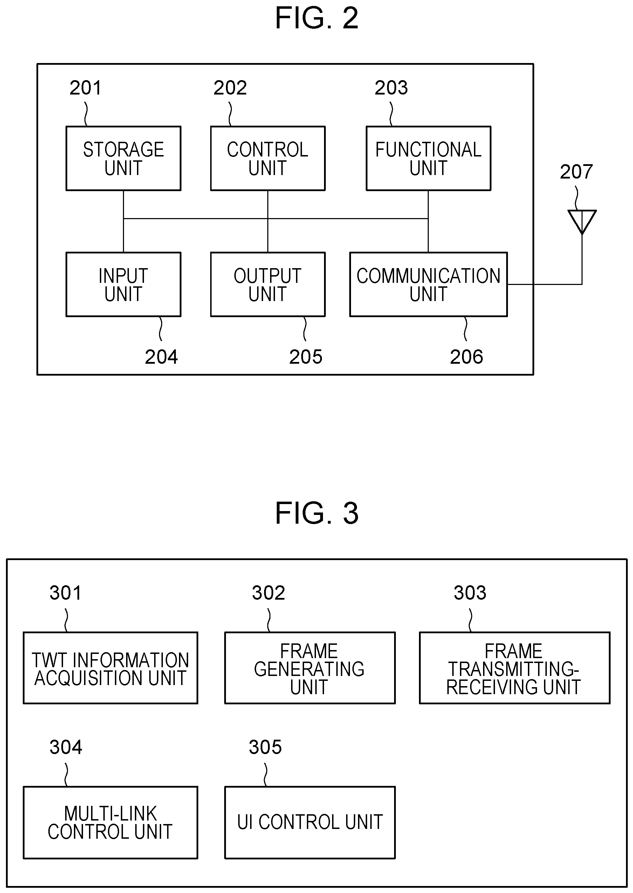

Fig. 2 illustrates an example of a hardware configuration of each communication device. Each communication device has a storage unit 201, a control unit 202, a functional unit 203, an input unit 204, an output unit 205, a communication unit 206, and an antenna 207.

The storage unit 201 is constituted of both or one of a ROM and a RAM, and stores programs for performing various types of operation, to be described later, and various types of information, such as communication parameters for wireless communication. RAM is an abbreviation for Random Access Memory, and ROM is an abbreviation for Read Only Memory. Other than a memory, such as a ROM and a RAM, a storage medium including a nonvolatile storage device, such as a hard disk or an SSD (solid state drive), may be used as the storage unit 201.

The control unit 202 is constituted of, for example, a processor, such as a CPU or an MPU, an ASIC (application-specific integrated circuit), a DSP (digital signal processor), or an FPGA (field programmable gate array). CPU is an abbreviation for Central Processing Unit, and MPU is an abbreviation for Micro Processing Unit. The control unit 202 executes a program stored in the storage unit 201 and controls the entire device by causing a hardware circuit, such as the ASIC, to operate. The control unit 202 may control the entire device in cooperation with a program and an OS (Operating System) stored in the storage unit 201.

Furthermore, the control unit 202 controls the functional unit 203 to execute a predetermined process, such as imaging, printing, or projecting. The functional unit 203 is hardware used by the device for executing the predetermined process. For example, if the communication device is a digital still camera or a camera-equipped smartphone, the functional unit 203 is an imaging unit that performs an imaging process for capturing a surrounding image via a camera unit (not shown) included in the communication device. For example, if the communication device is a printer, the functional unit 203 is a print unit that performs a printing process on a sheet, such as paper, based on print data obtained by wireless communication from an external source. For example, if the communication device is a projector or smartglasses, the functional unit 203 is a projecting unit that performs a projecting process for image data or video data obtained by wireless communication from an external source. In the case of smartglasses, the projection surface is, for example, an end user's retina. The data to be processed by the functional unit 203 may be data stored in the storage unit 201 or may be data communicated with another AP or STA via the communication unit 206, to be described later. Furthermore, a communication device, such as an AP 101, can provide a network storage function, such as NAS (Network Attached Storage). This function is provided as a web service, such as a network storage service, to another communication device. For example, a communication device, such as an STA, connects to a network storage service provided by an AP MLD or the like by using a protocol, such as SMB, FTP, or WebDAV. Then, the communication device, such as an STA, uploads a file to the storage service or downloads a file from within the storage. The data communication involving the uploading and the downloading is achieved by communicating a UHR PPDU between devices.

The input unit 204 receives various types of operations from a user. The output unit 205 performs various types of outputs to the user. An output from the output unit 205 includes at least one of display on a screen, audio output from a loudspeaker, and vibration output. Both the input unit 204 and the output unit 205 may be realized with a single module, as in a touchscreen. The output unit 205 functions as display means for presenting information to the user. The input unit 204 functions as reception means for receiving a user operation.

The communication unit 206 performs control of wireless communication compliant with the IEEE 802.11 standard series, as well as control of IP communication. In this embodiment, the communication unit 206 can execute communication control for transmitting and receiving a UHR PPDU, which is a wireless frame of the UHR standard, as well as a PPDU compliant with standards preceding the UHR standard, by operating in cooperation with the antenna 207. The antenna 207 is, for example, an antenna capable of transmitting and receiving signals in at least one of frequency bands including a sub-GHz band, 2.4 GHz band, 5 GHz band, 6 GHz band, and millimeter-wave band.

If the communication device is compliant with, for example, the NFC standard, the Bluetooth standard, and/or the wired communication standard mentioned above, the communication unit 206 may be configured to perform control of wireless communication and/or wired communication compliant with these communication standards.

### (Functional Configuration of Communication Device)

Fig. 3 is a block diagram illustrating an example of a functional configuration of each communication device according to this embodiment. In this embodiment, each functional block is stored as a program in the storage unit 201, and the function thereof is implemented as a result of the control unit 202 executing the program. By executing the program, the control unit 202 controls each hardware unit and calculates and processes information, thereby implementing the corresponding function. Some or all of the functional blocks may be implemented in hardware. In this case, some or all of the functional blocks are constituted by, for example, an ACIC (application-specific integrated circuit).

In this embodiment, each communication device includes a TWT information acquisition unit 301, a frame generating unit 302, a frame transmitting-receiving unit 303, a multi-link control unit 304, and a UI control unit 305.

The TWT information acquisition unit 301 acquires TWT information, set in a different network, from, for example, a management frame, such as a beacon frame, a probe response frame, or an association response frame, from the different network.

The frame generating unit 302 generates a wireless frame to be transmitted via a frame transmitting-receiving unit, to be described later. In this embodiment, based on the TWT information of the different network acquired by the TWT information acquisition unit 301, a frame for sharing the TWT information with another communication device is generated.

The frame transmitting-receiving unit 303 includes an antenna and circuit used for transmitting and receiving a wireless frame (or a signal) to and from another wireless communication device, and also includes a program for controlling the antenna and circuit. In accordance with the IEEE 802.11 standard series, the frame transmitting-receiving unit 303 executes communication control of a wireless LAN based on the frame generated by the frame generating unit 302.

The multi-link control unit 304 executes control of link-establishment-related processes, including a link establishing process for establishing at least one link to be used in wireless communication with a counterpart MLD, a communication starting process, a process for adding or deleting a link after the link establishment, and a communication terminating process for deleting all links. The link establishing process is mainly constituted of an authentication process, an association process, and a 4-way-hand-shake (4WHS) process.

The UI control unit 305 is constituted of user-interface-related hardware, such as a touchscreen or button for receiving an operation from the user, and a program for controlling the hardware. For example, the multi-link control unit 304 receives an operation from the user via the UI control unit 305 so as to select a counterpart device to which the communication device is connected. Furthermore, the multi-link control unit 304 receives an operation from the user via the UI control unit 306 so as to perform a process for selecting or setting an STA that is included in each communication device and that is used by the communication device when establishing a link. The UI control unit 306 may further have a function for indicating, to the user, information about audio output or the like.

### (TWT Information)

Next, TWT information will be described. In this embodiment, target wake time (TWT) information at least includes information related to a service period (SP). However, the TWT information is not limited to this and may further include other TWT-related information. Examples of information that may be included may be related to a traffic identifier (TID) indicating the type of data transmittable in the SP and a TWT group indicating a group of multiple STAs sharing a common SP.

The SP is a period in which an AP and an STA perform adjustment and setting processes in a network and in which the STA is in an awake state (communicable state). The STA is normally in a doze state (non-communicable state) outside the SP but is not limited thereto, and may be configured to perform communication outside the SP. In the SP, the STA transitions to the awake state to transmit and receive a frame. In contrast, when the STA is outside the SP, the STA can transition to the doze state to save power. The TWT information is not limited to the above and may include information included in TWT parameter information, to be described later. Examples of SP-related information include information related to the start timing of the SP, information related to duration from the start to the end of the SP, and information related to an interval between start timings of SPs.

### (TWT Information Setting)

Next, a flowchart of how TWT information is set in the AP MLD 102 and the STA MLD 103 of the network 101 will be described.

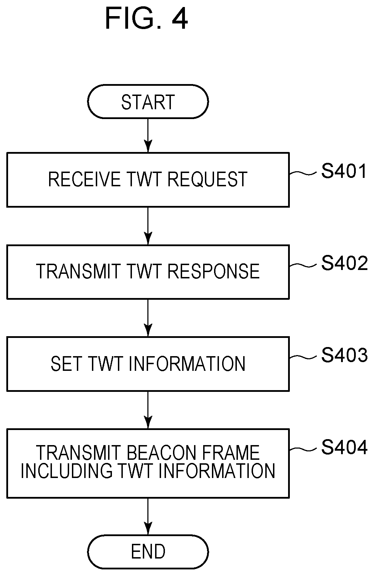

Fig. 4 illustrates an example of the flowchart where the AP MLD 102 receives a TWT request from the STA MLD 103 and sets the TWT information by transmitting a TWT response in response to the TWT request.

First, the flowchart shown in Fig. 4 starts when the STA MLD 103 sets or updates the TWT information. The following description relates to how the TWT information is set during initial link setup between the AP MLD 102 and the STA MLD 103 in this embodiment.

In step S401, the AP MLD 102 receives, via the communication unit 206, an association request frame including a TWT request transmitted by the STA MLD 103. A TWT request is information indicating that an STA MLD has requested an AP MLD to set TWT information. The TWT request includes, for example, TWT information, such as information indicating whether or not there is TWT support of an STA serving as a transmission source, and information related to an AID (Association Identifier), an SP start timing, duration from the start to the end of the SP, and a cycle and an interval of the SP.

In step S402, the AP MLD 102 transmits an association response frame including a TWT response to the STA MLD 103 via the communication unit 206. A TWT response is information indicating approval to set, as TWT information, the information related to the start time and end time of the SP and the cycle of the SP in the TWT request received in step S401. For example, the AP MLD 102 may be configured to indicate the approval by including a value equal to the TWT request in the TWT response. If the AP MLD 102 does not approve the received TWT request, the AP MLD 102 may be configured to indicate a value different from the TWT request in the TWT response.

In step S403, a TWT-information setting process and a link establishment process are performed in the AP MLD 102 and the STA MLD 103 based on the TWT response transmitted by the AP MLD 102.

After the TWT information is set in the AP MLD 102 and the STA MLD 103, the AP MLD 102 periodically transmits a beacon frame including the set TWT information (step S404). Accordingly, the AP MLD 105 can receive and acquire the TWT information with respect to the AP MLD 102 and the STA MLD 103.

Although an example of the flow of how the TWT information is set during initial link setup between the AP MLD 102 and the STA MLD 103 is described in Fig. 4, the flow is not limited to this. The flow may start based on the STA MLD 103 transmitting a TWT request after the link setup.

Furthermore, although the flow described above relates to how the TWT information is set in the AP MLD 102 and the STA MLD 103 in this embodiment, the TWT-information setting process and the link establishment process may be performed in the AP MLD 105 and the STA MLD 106 in accordance with a similar flow.

### (Element Used for Sharing TWT Information)

Before proceeding to the description of the flow of a TWT-information sharing process, an element including a wireless frame to be used when sharing the TWT information used in the TWT-information sharing process will be described.

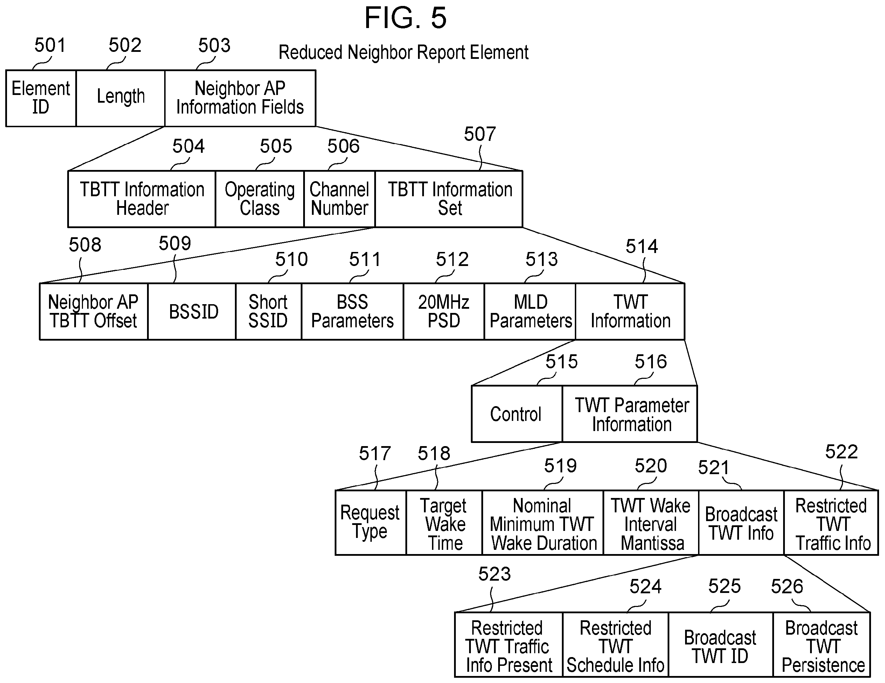

Fig. 5 illustrates an example of a frame format of a reduced neighbor report element according to this embodiment. In this embodiment, TWT information of another network is shared with a network constructed by or connected to the own device by using the reduced neighbor report element. In the following description of each field including the reduced neighbor report element, only the name of the field will be used, and the description of the field will be omitted.

The reduced neighbor report element shown in Fig. 5 includes an element ID 501, a length 502, and a neighbor AP information field 503. The element ID 501 is an identifier for identifying an information element and, in this embodiment, includes an identifier indicating the reduced neighbor report element. The length 502 is a field indicating a data length of the element and, in this embodiment, includes information indicating a data length of the neighbor AP information field 503. The neighbor AP information field 503 is a field indicating information about a different network and, in this embodiment, includes TWT information about the different network. Information included in the neighbor AP information field 503 will be described later.

Each communication device sequentially generates the reduced neighbor report element shown in Fig. 5 from the element ID 501 and transmits the generated reduced neighbor report element to another communication device. In this case, each communication device performs the transmission after generating all fields within the element. In detail, each communication device performs the transmission to another communication device after generating all of the element ID 501, the length 502, and the neighbor AP information field 503. Alternatively, each AP MLD may perform the transmission concurrently with the generation of the fields. In detail, for example, each communication device may transmit the length 502 concurrently with the transmission of the generated element ID 501.

Each communication device performs the transmission by including the reduced neighbor report element shown in Fig. 5 in a MAC (Medium Access Control) frame such as a beacon frame or a probe response frame. Moreover, in addition to such a MAC frame, each communication device can add the element to a MAC frame such as an association response frame or a re-association response frame.

The neighbor AP information field 503 includes one or more pieces of neighbor AP information. Each piece of neighbor AP information includes a TBTT information header 504, an operating class 505, a channel number 506, and a TBTT information set 507. An AP indicated in each piece of neighbor AP information may also be referred to as a reported AP. TBTT is an abbreviation for Target Beacon Transmission Time. The TBTT information header 504 includes information indicating a data length of the TBTT information set 507 and information indicating the number of TBTT information fields included in the TBTT information set 507. The number of TBTT information fields is indicated as a value obtained by subtracting 1 from the actual number included in the TBTT information set 507. The operating class 505 indicates a channel start frequency. A primary channel of the reported AP is indicated based on information indicated by the operating class 505 and the channel number 506.

The TBTT information set 507 includes one or more pieces of TBTT information. Information included in each piece of TBTT information included in the TBTT information set 507 will be described later. By including multiple pieces of neighbor AP information, the neighbor AP information field 503 can include information related to other multiple APs. A communication device that has received the reduced neighbor report element can identify the primary channel in accordance with the operating class 505 and the channel number 506, thereby performing communication control more efficiently.

The TBTT information set 507 includes one or more pieces of TBTT information. Each piece of TBTT information includes a neighbor AP TBTT offset 508, a BSSID 509, a short SSID 410, a BSS parameter 511, a 20-MHz PSD 511, a MLD parameter 513, and TWT information 514. The neighbor AP TBTT offset 508 indicates an offset in a time unit (TU) from a previous TBTT to a subsequent TBTT of the reported AP. The BSSID 509 indicates a basic service set identifier (BSSID) of the reported AP. The short SSID 510 indicates a 32-bit value calculated from a service set identifier (SSID) of the network constructed by the reported AP. The BSS parameter 511 indicates various types of information related to the reported AP indicated by the BSSID 509. The 20-MHz PSD 511 is information indicating maximum transmission power and indicates, for example, maximum transmission power corresponding to a 20-MHz primary channel of the reported AP. The MLD parameter 513 includes information related to an AP MLD to which the reported AP belongs, and includes, for example, an AP MLD ID as an identifier for an AP MLD and a link ID as an identifier for the link of the reported AP within the AP MLD. The TWT information 514 is a field including the TWT information of the reported AP and is used for sharing by including TWT information of another network in the element.

The TWT information 514 includes control 515 and TWT parameter information 516. The control 515 is information related to information included in the TWT parameter information 516, and includes, for example, information indicating whether the TWT information is a broadcast TWT, an individual TWT, or TWT information indicating the TBTT interval. A broadcast TWT is a TWT in which TWT information is set between an AP and multiple STAs. An individual TWT is a TWT in which TWT information is set between an AP and an STA in a one-to-one fashion. The TWT parameter information 516 includes a request type 517, a target wake time 518, nominal minimum TWT wake duration 519, a TWT wake interval mantissa 520, broadcast TWT info 521, and restricted TWT traffic info 522. The request type 517 includes, for example, a TWT flow identifier for identifying the flow of TWT controlled based on TWT information included the TWT information. The target wake time 518 is information indicating a time to a subsequent SP, and includes a positive integer corresponding to a timing synchronization function (TSF) time that requests release of the doze state of an STA. The nominal minimum TWT wake duration 519 is information indicating expected duration of time from the start to the end of the SP, and includes information indicating an expected minimum time that an STA needs to be in the awake state in order for the STA to complete exchange of wireless frames after being released from the doze state. The TWT wake interval mantissa 520 is information indicating an interval between start timings of SPs, and includes information indicating a mantissa value of a value indicating an interval at which the doze state of an STA is released. Information included in the broadcast TWT info 521 will be described later. The restricted TWT traffic info 522 designates, in a bitmap format, a traffic identifier (TID) as a specific wireless frame for communication in a downlink (DL) direction and an uplink (UL) direction.

The broadcast TWT info 521 includes restricted TWT traffic info present 523, restricted TWT schedule info 524, a broadcast TWT ID 525, and broadcast TWT persistence 526. The restricted TWT traffic info present 523 includes information indicating whether or not the restricted TWT traffic info 522 is included. The restricted TWT schedule info 524 will be described later. The broadcast TWT ID 525 stores information for identifying TWT information of a broadcast TWT set by the reported AP. The broadcast TWT persistence 526 stores information indicating the number of TBTTs within an SP indicated in the TWT information.

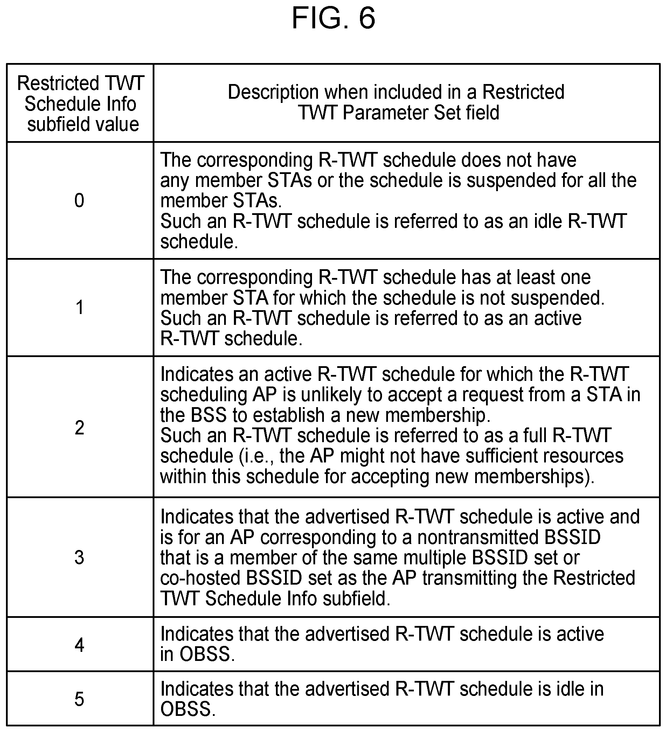

The restricted TWT schedule info 524 will now be described with reference to Fig. 6. Fig. 6 is a diagram for explaining a value included in the restricted TWT schedule info 524 and the meaning indicated by the value. Values of 0 to 3 are each used when an AP provides a notification about a TWT schedule to an STA within the own BSS. The value of 0 indicates that the TWT is in the idle state, whereas the values of 1 and 3 each indicate that the TWT schedule is active. The value of 2 indicates that the schedule is active, but that the likelihood of allowing new participation is low. Values of 4 and 5 each mean that the TWT information indicates a TWT schedule of another network (OBSS).

If the restricted TWT schedule info 524 includes the value of 4, the TWT information is TWT information of another network, and the TWT schedule based on the relevant TWT information is in the active state in another BSS. If the field 524 includes the value of 5, the TWT information is TWT information of another network, and the TWT schedule based on the relevant TWT information is in the idle state in another BSS.

### (Sharing Process of TWT Information)

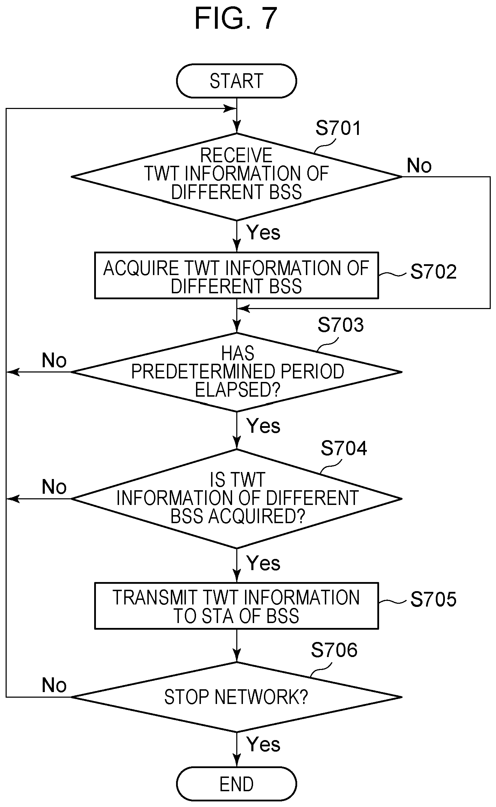

The following description with reference to Fig. 7 relates to an example of a flowchart of a process in which the AP MLD 105 shares the TWT information of the network 101 with the STA MLD 106 by using the aforementioned reduced neighbor report element. In this embodiment, the AP MLD 105 acquires the TWT information of the network 101 from a wireless frame including the TWT information of the network 101 transmitted by the AP MLD 102. Then, the AP MLD 105 shares the acquired TWT information of the network 101 with the STA MLD 106 of the network 104. This flowchart indicates a process executed as a result of the control unit 202 reading and executing a computer program stored in the storage unit 201. For example, this flowchart starts immediately after transmission of a beacon frame regularly transmitted by the AP MLD 105. This flowchart may start when the AP MLD 105 receives a wireless frame, such as a beacon frame, a probe response frame, or an association response frame, from the AP MLD 102 constituting a different network. This flowchart selectively illustrates a process related to sharing of TWT information of an OBSS with an STA of a BSS.

First, in step S701, the AP MLD 105 receives, via the frame transmitting-receiving unit 303, a wireless frame transmitted by the AP MLD 102 (e.g., the beacon frame transmitted by the AP MLD 102 in step S404). If TWT information is included in the wireless frame, the process proceeds to step S702. If TWT information is not included, the process ends. The wireless frame received in step S701 is a MAC frame transmitted by the AP MLD 102 and assumed to be a management frame, such as a beacon frame, a probe response frame, or an association response frame, but is not limited thereto. For example, a control frame, an action frame, or the like is also possible.

Subsequently, in step S702, the TWT information acquisition unit 301 of the AP MLD 105 acquires the TWT information of the network 101 from the wireless frame including the TWT information received in step S701.

In step S703, the AP MLD 105 determines whether or not a predetermined period has elapsed from the start of this flow. The predetermined period in this embodiment is a transmission interval of the beacon frame transmitted by the AP MLD 105. In other words, the AP MLD 105 according to this embodiment determines whether the predetermined period (e.g., 100 TU) has elapsed from the transmission of a previous beacon frame. If it is determined in step S703 that the predetermined period has elapsed (Yes in step S703), the process proceeds to step S704. If it is determined in step S703 that the predetermined period has not elapsed (No in step S703), the process proceeds to step S701.

Then, in step S704, it is determined whether TWT information of a different BSS is acquired within the predetermined period. If it is determined in step S704 that TWT information of a different BSS is acquired within the predetermined period (Yes in step S704), the process proceeds to step S705. If it is determined that TWT information of a different BSS is not acquired within the predetermined period (Yes in step S704), the process proceeds to step S701.

In step S705, the AP MLD 105 stores the TWT information of the network 101 acquired in step S702 into the aforementioned reduced neighbor report element, and transmits the wireless frame including the element to the STA MLD 106 via the frame transmitting-receiving unit 303. In the element, a restricted TWT schedule info subfield is set to 4. The wireless frame transmitted by the AP MLD 105 in step S705 is a MAC frame assumed to be a management frame, such as a beacon frame, a probe response frame, or an association response frame, but is not limited thereto. For example, a control frame, an action frame, or the like is also possible. This embodiment relates to an example where the TWT information of the network 101 alone is included as TWT information of a different network, but is not limited thereto. An assumed example is a case where multiple networks different from the network 104 surround the AP MLD 105 and TWT information of multiple different BSSs is received until the predetermined period elapses. The TWT-information sharing process in that case will be simply described by using the above-described flow. First, the AP MLD 105 receives a wireless frame including TWT information of a first different BSS in step S701. Then, the TWT information of the first BSS is acquired from the received wireless frame. Subsequently, a wireless frame including TWT information of a second different BSS is received before the predetermined period elapses (No in step S703, and step S701). Then, the TWT information of the second BSS is acquired from the received wireless frame. After the predetermined period elapses (Yes in step S703), the acquired TWT information of the first BSS and the acquired TWT information of the second BSS are stored into the reduced neighbor report element, and a wireless frame including the element is transmitted to the STA MLD 106 via the frame transmitting-receiving unit 303 (step S705). When TWT information of multiple networks is received within the predetermined period in this manner, the TWT information of the multiple networks is shared at once in step S507. When the wireless frame including the TWT information is transmitted in step S705, the AP MLD 105 causes the process to proceed to step S706. In step S706, the AP MLD 105 determines whether to stop the network. If it is determined that the network is to be stopped, a network providing process is terminated, and the series of processes is terminated. On the other hand, if it is determined that the network is not to be stopped, the process proceeds to step S701, and a series of notification control is performed. In detail, the AP MLD 105 may determine to stop the network upon reception of a shutdown operation or power off operation (not shown).

The AP MLD 105 stores the TWT information of the network 101 received from the AP MLD 103 into the aforementioned reduced neighbor report element and transmits the reduced neighbor report element to the STA MLD 106 in this manner, so that TWT-related information of a different network can be shared with the network to which the own device belongs. The AP MLD 105 may be configured to transmit, as the aforementioned TWT information, information related to at least the target wake time 518, the nominal minimum TWT wake duration 519, and the TWT wake interval mantissa 520 in step S703. These pieces of information are information related to an SP start timing in another network, information related to SP duration, and information related to an interval between start timings of SPs, respectively. Therefore, by recognizing information included in the target wake time 518, the STA MLD 106 can recognize the start timing of a subsequent SP of another network. By recognizing information included in the nominal minimum TWT wake duration 519, the STA MLD 106 can recognize the SP duration of another network. By recognizing information included in the TWT wake interval mantissa 520, the STA MLD 106 can recognize the interval between the start timings of SPs of another network.

An STA connected to the AP MLD 105 and represented by the STA MLD 106 or the like performs transmission suppression control so as not to perform its own data transmission process during the SP of the aforementioned another network that is recognized.

Accordingly, the STA MLD 106 can ascertain the SP start timing and duration of the network 101, and can suppress transmission in the SP of the aforementioned another network that is ascertained. Consequently, interference of communication in the SP of the aforementioned another network can be prevented.

In the above-described control in Fig. 7, the transmission interval of a beacon frame is used as an example of a period for collecting the TWT of the OBSS, and an STA of the BSS is notified of the TWT information of the OBSS received during that period. However, the control is not limited to this. For example, the AP MLD 105 may be configured to manage TWT information transmitted by an AP of the OBSS in association with final acquisition duration thereof, and provide a notification about the TWT information of the OBSS acquired within a predetermined reference time (e.g., within one minute) to an STA of the

### BSS.

### <Second Embodiment>

In the first embodiment, the AP MLD 105 shares the TWT information of the network 101 with the STA MLD 106 by using the reduced neighbor report element. In the second embodiment, an example where a neighbor report element is used in place of the reduced neighbor report element will be described. Since a hardware configuration and functional configuration of each communication device according to this embodiment are similar to those in the first embodiment, descriptions thereof will be omitted. Since the TWT-information setting process in the AP MLD 102 and the STA MLD 103 in the network 101 described with reference to Fig. 4 and the process described with reference to Fig. 7 in which the AP MLD 105 shares the TWT information of the network 101 with the STA MLD 106 are also similar to those in the first embodiment, descriptions thereof will be omitted.

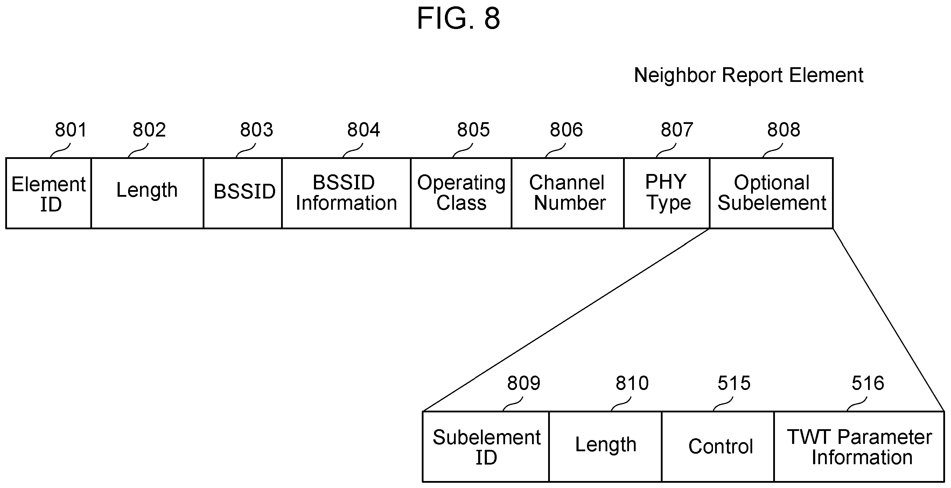

The neighbor report element according to this embodiment will now be described with reference to Fig. 8. The AP MLD 105 stores the TWT information of the different BSS acquired in step S702 described above into the element, and transmits a wireless frame including the element to the STA MLD 106 via the frame transmitting-receiving unit 303. The wireless frame including the element is a MAC frame assumed to be a management frame, such as a beacon frame, a probe response frame, or an association response frame, but is not limited thereto. For example, a control frame, an action frame, or the like is also possible.

The neighbor report element shown in Fig. 8 includes an element ID 801, a length 80, a BSSID 803, BSSID information 804, an operating class 805, a channel number 806, a PHY type 807, and an optional sub-element 808. Since the element ID 801, the length 80, the BSSID 803, the BSSID information 804, the operating class 805, and the channel number 806 each include information similar to the corresponding field of the same name described above, descriptions thereof will be omitted. The PHY type 807 includes a PHY type of an AP indicated by the BSSID 803.

The optional sub-element 808 includes a sub-element ID 809, a length 810, control 515, and TWT parameter information 516.

By using the aforementioned neighbor report element in this manner, the AP MLD 105 can share the TWT information of the network 101 with the STA MLD 106.

### <Third Embodiment>

In the third embodiment, the AP MLD 105 shares the TWT information of the network 101 with the STA MLD 106 by using a TWT element in place of the aforementioned elements.

Since a hardware configuration and functional configuration of each communication device according to this embodiment are similar to those in the first embodiment, descriptions thereof will be omitted. Since the TWT-information setting process in the AP MLD 102 and the STA MLD 103 in the network 101 described with reference to Fig. 4 and the process described with reference to Fig. 7 in which the AP MLD 105 shares the TWT information of the network 101 with the STA MLD 106 are also similar to those in the first embodiment, descriptions thereof will be omitted.

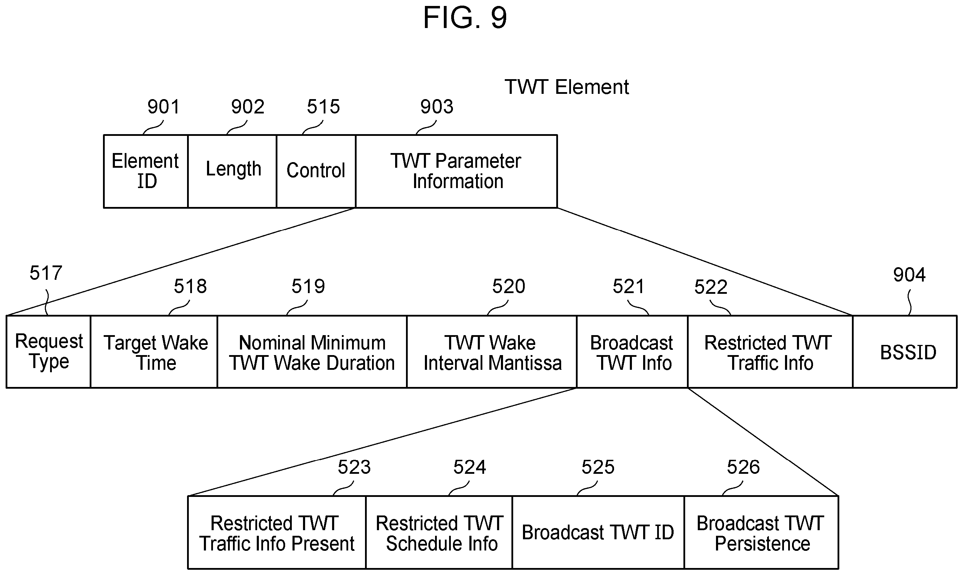

The TWT element according to this embodiment will now be described with reference to Fig. 9. The AP MLD 105 stores the TWT information of the different BSS acquired in step S702 described above into the element, and transmits a wireless frame including the element to the STA MLD 106 via the frame transmitting-receiving unit 303. The wireless frame including the element is a MAC frame assumed to be a management frame, such as a beacon frame, a probe response frame, or an association response frame, but is not limited thereto. For example, a control frame, an action frame, or the like is also possible.

The TWT element shown in Fig. 9 includes an element ID 801, a length 80, control 515, and TWT parameter information 903.

In this embodiment, the TWT parameter information 903 included in the TWT element further includes a BSSID 904 in addition to the aforementioned fields. The BSSID 904 stores information indicating a BSSID of an AP in which the TWT information indicated in the TWT parameter information 903 is set. This embodiment relates to a case where the BSSID 904 is stored immediately after the restricted TWT traffic info 522, but is not limited thereto. For example, the BSSID 904 may be stored immediately after the broadcast TWT persistence 526, and may at least be stored in the TWT parameter information 903 included in the TWT element. Accordingly, an STA becomes capable of identifying which network the TWT information indicated by the TWT element pertains to. Furthermore, even if there are multiple other networks, it becomes possible to identify which network each piece of TWT information pertains to.

Accordingly, by using the aforementioned TWT element, the AP MLD 105 can share the TWT information of the network 101 with the STA MLD 106.

### <Other Embodiments>

Each of the above-described embodiments relates to the flow of how an AP MLD shares TWT information of another network with an STA MLD, but is not limited thereto. For example, if an STA MLD receives and acquires TWT information of another network, the STA MLD may be configured to share the TWT information of the aforementioned another network by using any of the aforementioned elements.

Each of the above embodiments relates to a case where TWT information of another network is shared, but is not limited thereto. Each element may be configured such that only R-TWT-related information is shared.

Furthermore, the flowchart of the AP MLD 105 shown in Fig. 4 and Fig. 7 may at least be partially or entirely realized by hardware. If the flowchart is to be realized by hardware, for example, a predetermined compiler may be used to generate a dedicated circuit on an FPGA from a computer program for implementing the respective steps, and this dedicated circuit may be used. FPGA is an abbreviation for Field Programmable Gate Array. Furthermore, a gate array circuit may be formed similarly to the FPGA and may be realized as hardware. Moreover, the flowchart may be realized by an ASIC (application-specific integrated circuit).

The present invention can also be realized by supplying a program that implements at least one feature of the above embodiments to a system or a device via a network or a storage medium and causing at least one processor in a computer of the system or the device to read and execute the program. Moreover, the present invention can also be realized by a circuit (e.g., ASIC) that implements at least one feature.

The present invention is not limited to the above embodiments, and various alterations and modifications are possible so long as they do not depart from the spirit and scope of the invention. Therefore, claims are appended in order to disclose the scope of the invention.

This application claims the benefit of Japanese Patent Application No. 2023-185970 filed October 30, 2023, which is hereby incorporated by reference herein in its entirety.

## Claims

1. A communication device comprising:
receiving means for receiving a wireless frame including information related to a target wake time of a first network constructed by a first communication device different from the communication device; and
transmitting means for transmitting a predetermined frame including a predetermined element, the predetermined element including information for identifying the first communication device and the information related to the target wake time of the first network.

2. The communication device according to claim 1, further comprising:
acquiring means for acquiring the information related to the target wake time of the first network based on the wireless frame received by the receiving means; and
generating means for generating the predetermined frame transmitted by the transmitting means based on at least the information, acquired by the acquiring means, related to the target wake time of the first network.

3. The communication device according to claim 1 or 2, wherein, in a state where the communication device is not participating in the first network, the transmitting means transmits the predetermined frame including the predetermined element that includes the information for identifying the first communication device and the information related to the target wake time.

4. The communication device according to any one of claims 1 to 3, further comprising:
constructing means for constructing a second network.

5. The communication device according to any one of claims 1 to 4, further comprising:
establishing means for establishing a link with a second communication device different from the communication device,
wherein the establishing means is capable of establishing a plurality of links with the second communication device via different frequency channels.

6. The communication device according to any one of claims 1 to 5,
wherein the predetermined frame is a management frame.

7. The communication device according to any one of claims 1 to 6,
wherein the communication device is an access point multi-link device compliant with an IEEE 802.11 series standard.

8. The communication device according to any one of claims 1 to 7,
wherein the predetermined element is a reduced neighbor report element, and
wherein the information for identifying the first communication device and the information related to the target wake time of the first network are included in the reduced neighbor report element.

9. The communication device according to any one of claims 1 to 7,
wherein the predetermined element is a neighbor report element, and
wherein the information for identifying the first communication device and the information related to the target wake time of the first network are included in the neighbor report element.

10. The communication device according to any one of claims 1 to 7,
wherein the predetermined element is a target wake time element, and
wherein the information for identifying the first communication device and the information related to the target wake time of the first network are included in the target wake time element.

11. A control method for a communication device, the control method comprising:
a receiving step for receiving a wireless frame including information related to a target wake time of a first network constructed by a first communication device different from the communication device; and
a transmitting step for transmitting a predetermined frame including a predetermined element, the predetermined element including information for identifying the first communication device and the information related to the target wake time of the first network.

12. A program for causing a computer to function as the control method for the communication device according to claim 11.
